**Europäisches Patentamt**

(19) **European Patent Office**

**Office européen des brevets**

(11) Publication number: **0 078 800**
**B1**

(12) # EUROPEAN PATENT SPECIFICATION

(45) Date of publication of patent specification: **03.12.86**

(51) Int. Cl.⁴: **B 64 D 17/20**

(21) Application number: **81903218.6**

(22) Date of filing: **14.12.81**

(86) International application number:
**PCT/SE81/00373**

(87) International publication number:
**WO 82/02030 24.06.82 Gazette 82/16**

(54) **PARACHUTE CANOPY.**

(30) Priority: **12.12.80 SE 8008747**

(43) Date of publication of application:
**18.05.83 Bulletin 83/20**

(45) Publication of the grant of the patent:
**03.12.86 Bulletin 86/49**

(84) Designated Contracting States:
**DE FR GB**

(56) References cited:
**DE-B-2 208 999**
**FR-A- 818 766**
**FR-A-1 210 342**

(73) Proprietor: **IRVIN FALLSKÄRMS AB**
**Krongjutaregatan 9 A**
**S-774 00 Avesta (SE)**

(72) Inventor: **ASTRAND, Harald**
**Sägmästargatan 3**
**S-546 00 Karlsborg (SE)**

(74) Representative: **Nordén, Ake et al**
**AWAPATENT AB Box 7402**
**S-103 91 Stockholm (SE)**

Courier Press, Leamington Spa, England.

EP 0 078 800 B1

## Description

The present invention relates to a parachute canopy of that type which comprises at least one steering or drive aperture, the opening area of which is arranged controllable by a parachutist by means of special operating members such as pull lines, whereby a parachute portion covering the control aperture inside the canopy is designed openable inwards the parachute canopy so that it by the air pressure within the canopy is brought into the position covering the control aperture the last-mentioned parachute portion being adapted by the operating members to be brought into a position more or less uncovering the control aperture and permitting escape of air through said control aperture.

A usual, completely closed parachute canopy which has neither steering nor drive apertures, is quickly activated when it, while being deployed, is filled with air. Such a parachute thus affords safe inflation and requires short height for becoming operative and, therefore, is usually used as rescue and paratroops parachute.

However, in certain situations it is, in order to reduce the risk of bodily injuries after the deployment an advantage that the parachute can be steered away, for example when there is danger of collision with another parachutist in the air or with obstacles on the ground. Thus, parachutes are known which are steerable immediately after having been opened and are load-bearing or which after that they are load-bearing can be imparted a changed shape which renders possible steering and own propulsion for the whole time until the landing. Usually, this is accomplished by means of an aperture situated asymmetrically on the canopy and which steers or imparts to the parachute a driving movement in a certain direction, or by means of symmetrically disposed apertures the openable area of which can be adjusted. In the latter case, the apertures have full area when the canopy is being deployed, and the steering is brought about by reducing the area of one or several of the apertures by diminishing the open space by means of pull lines.

The drawback of these known designs is that the parachute normally cannot serve as a usual parachute driven by the wind during the descent, since in such a case all steering apertures must be closed. First time jumpers, when rescue-parachuting from airplanes, are unexperienced with steering of the parachute and, therefore, easily can fail so that the jumper with increased speed drives with the wind, and thereby, considerably increases the risk of injuries in connection with the landing. In the dropping of paratroops, also experience has shown that the risk of collisions between the parachutists immediately after the jump is greater with steerable parachutes of known type, which after the deployment phase may drive against one another. The increased risk of collision between steerable parachutes is present also when jumping in the dark during the whole descent, as the jumpers may have difficult to see one another and in time turn the parachute for steering away.

The French patents 818,766 and 1,210,342 illustrate parachute canopys with inwards openable flaps designated to govern the air-flow through the opening in the center of the canopy. By the flaps the fall-velocity of the parachute may be controlled, but no kind of steering whatsoever of the parachute will occur.

DE—B—2,208,999 corresponding to the pre-characterising part of claim 1, illustrates a parachute canopy comprising each other covering flaps, which open in order to prevent the canopy to be overloaded. The flaps are provided as parts of the canopy, which overlap each other. As the pressure inside the canopy grows too high, the flaps slide apart so that air can escape, and when the pressure inside the canopy decreases the flaps return to their closing positions. The flaps may also be pulled away from each other by the parachutist by means of operating lines. The openings cannot be completely uncovered or opened by pulling inwards the inside parts of the canopy. The outside parts of the canopy are still covering the openings, thereby guiding the air-flows tangentially out of the canopy instead of radially outwards. The nets attached to the inner flaps, as shown in Figs. 7 and 8, are elastic and are only intended to facilitate the returning of the flaps to their original positions and have no supporting functioning.

In DE—B—2,208,999 the flaps are designed primarily to control the stresses of the fabric of the canopy. If, for example, only one of the openings is open, see Figs. 5 and 6, and the other one simultaneously is closed, the canopy tends to rotate around its symmetry axis due to the from the canopy tangentially directed air-flow, that is the parachute would not move in a diagonal direction. If both of the openings are open simultaneously, which they usually would be, the tangentially directed air-flows will balance and thus the parachute will probably not tend to rotate, the propulsion will be negligible because the propelling composants of the tangentially directed air-flows are exceedingly small (the angle between the openings is 90°).

The main object of the present invention is to provide a steerable parachute canopy of the type stated in the introduction with which the above-mentioned draw-backs are avoided. Another object of the invention is thus to provide a steerable parachute canopy which works as a conventional uninterrupted canopy when being deployed, and moreover, when the parachutist so requires, without any specific measures being taken from his side, whereas the parachute canopy shall be capable of becoming steered by means of control lines, whenever so desired.

To accomplish this, the control aperture on the outside of the canopy comprises at least one radial slot seen in parachute plan view which is entirely covered by a parachute portion of an air-permeable material, such as netting, cloth, ribbon or the like.

These and other objects are achieved according to the invention thereby that the parachute canopy has been imparted the characteristics stated in the subsequent claims.

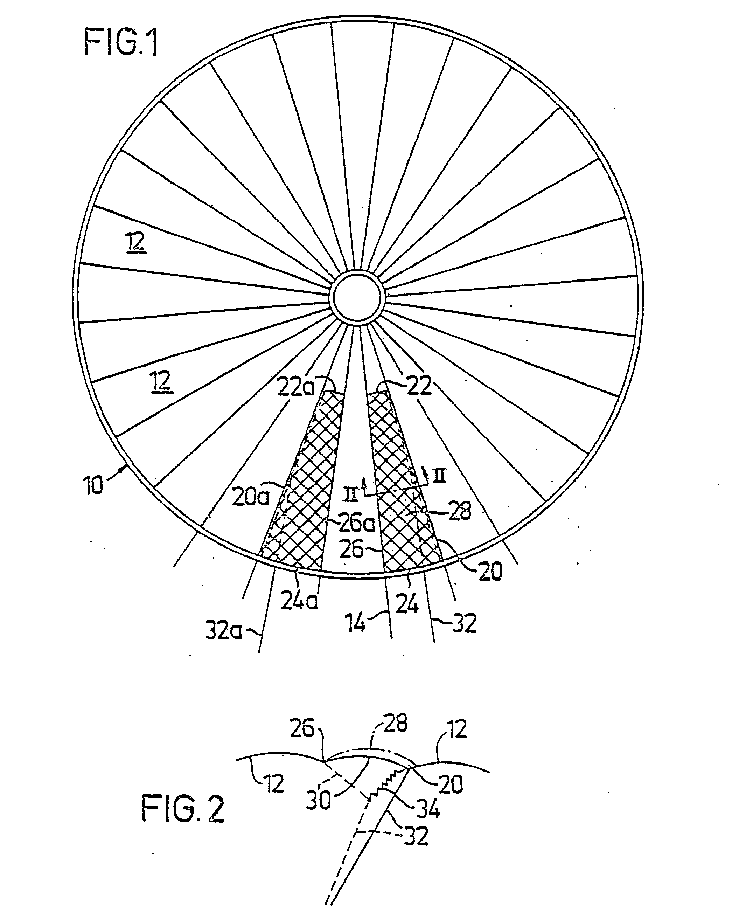

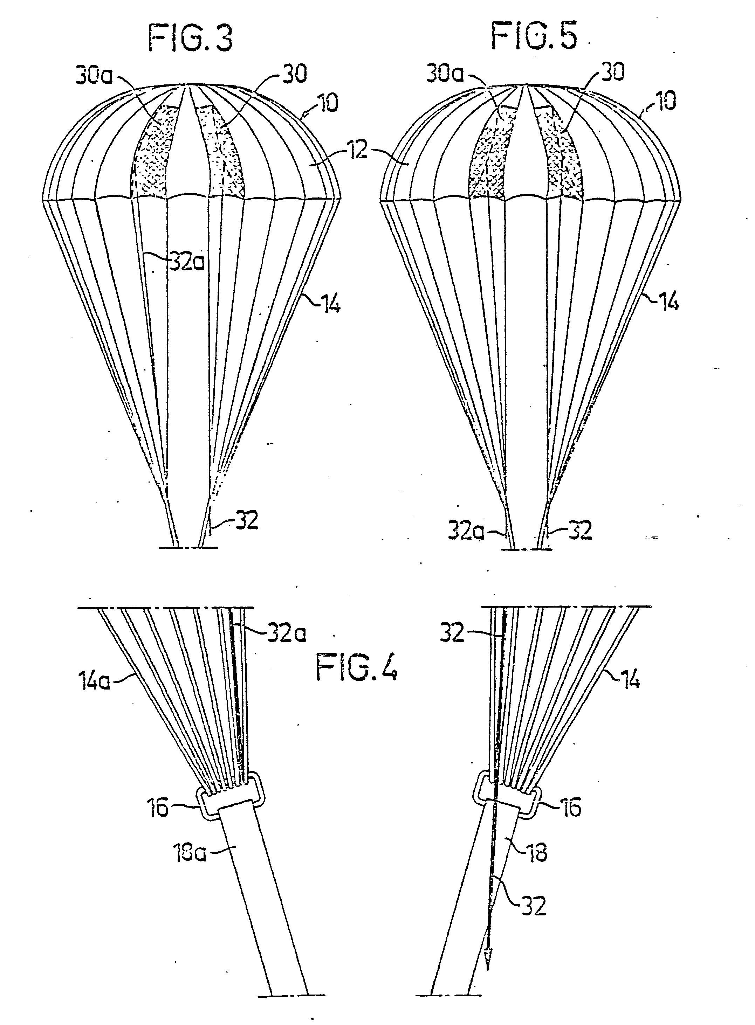

The invention will be described nearer in the following in connection with an embodiment shown in the attached drawings. Figure 1 shows a view of the parachute canopy according to the invention provided with two steering or drive apertures. Figure 2 shows on a larger scale a section following the line II-II in Figure 1. Figure 3 shows a side view of a parachute canopy with control and shrout lines. Figure 4 shows on a larger scale a view of the lower portion of the parachute of Figure 3. Figure 5 shows a view resembling Figure 3 of the parachute when both steering apertures are actuated.

The parachute shown in the drawings comprises, as is evident fom i a Figure 1, a round canopy 10, which is plane or shape-made and which is composed of a number of gores 12. As is shown in the Figures 3 and 4, the parachute canopy 10 is in conventional manner by a number of strout lines 14 connected with fittings 16 which in turn by means or straps, or as an alternative, woven belts 18 are connected with a (not shown) harness carried by the parachutist.

The parachute canopy made according to the invention has two steering apertures which are formed identically alike and of which, therefore, only that at right-hand in Figure 1 will be described nearer. Each steering opening is in the present case formed by a slit or slot 20 which runs radially e.g. between two gores. This slot 20 may itself constitute the steering aperture but, in addition, slot or slits 22, 24 passing approximately rectangularly to the slot 20 may be formed in the canopy 10 over the breadth of a gore, for example, so that a flap is formed which is connected with the parachute canopy along the radial joint line 26 between the slots 22 and 24 only. The portion of the parachute canopy delimited by the slots 20, and possibly 22, 24 also, which portion henceforth will be denominated steering gore, is covered by an air-permeable material, such as open-meshed cloth, netting or ribbon 28, which are sewn onto the external side of the canopy and prevent the steering gore from opening towards the upper side of the parachute canopy 10.

The covering material 28 is shown in Figure 2 with dash-dotted lines.

Fixed to the exposed portion of the steering gore at the slot 20, e.g. on the centre thereof, is an opening line, such as a pull line 32, which runs down to the parachute fitting 16 shown in Figure 4. By pulling the pull line 32 as is indicated by the arrow in Figure 4, the steering gore can be drawn downwards from the underside of the parachute canopy, as is indicated with broken lines in the Figures 2 and 3, whereby a slot or aperture is uncovered through which the air can stream out from the interior of the parachute canopy through the air-permeable material 28 and thus accomplish a steering or driving movement of the parachute.

If the parachutist lets the operating line 32 go, the steering gore 30 will be caused by the air pressure to return into the position shown in Figure 2 with full lines, the parachute then working as a usual parachute, the canopy of which has no steering and drive apertures and which thus has a completely closed canopy.

The return movement of the steering gore 30 can be assisted by elastic straps 34 or the like attached between the edge of the adjacent parachute gore 12 and the steering gore 30, which straps 34 can be used also to delimit the steering aperture area. Obviously, separate return and arresting straps may be provided also.

The left-hand steering gores 30a shown in the figures are identically alike the steering gores 30, but reversed, for which reason the details comprised thereby have been given the same denominations with an "a" added.

If the steering gores 30, 30a, which are shown in the Figures 1 to 5, are positioned in the rear half of the parachute canopy 10 relatively to that direction which is faced by the jumper, there is obtained by traction downwards of the right-hand steering line, as is shown in the Figures 3 and 4, a turning movement to the left of the parachute. On simultaneous traction downwards of both the right-hand and the left-hand steering lines 32 and 32a, which is shown in Figure 5, the parachute is imparted a driving movement ahead as long as the downward traction is maintained. It is clear that positioning of the steering gores 30, 30a on the front half of the parachute canopy 10 results in an opposite effect. It is also obvious that the steering gores 30, 30a can be more in number than 2, such as 4, 6 etc., and in pairs or uniformly placed on the one half portion of the canopy.

As is evident from the above said, a parachute has been achieved which under jumping and deployment works as a parachute with totally closed canopy as well as in situations of panic when the jumper most likely will let the operating lines go, whereas it at the same time renders possible to bring about steerage and driving movement by suitably actuations of the operating lines 32, 32a.

**Claims**

1. Parachute canopy (10) of the type comprising at least one control or drive aperture (20, 20a), the opening area of which is devised controllable by a parachutist by means of special operating members, such as pull lines (32, 32a), whereby a parachute portion (30, 30a) covering the control aperture inside the canopy is designed openable inwards the parachute canopy so that it by the air pressure within the canopy is brought into the position covering the control aperture (20, 20a) the last-mentioned parachute portion (30, 30a) being adapted by the operating members (32, 32a) to be brought into a position more or less uncovering the control aperture and permitting escape of air through said control aperture, characterized in that the control aperture on the outside of the canopy comprises at least one radial slot (20, 20a) seen in parachute plan view, which if entirely covered by a parachute portion of an air-permeable material, such as netting, cloth, ribbon or the like.

2. Canopy according to claim 1, characterized in that the control aperture comprises a radial slot (20, 20a) between two parachute gores, the operating member (32, 32a) being fixed to the mid portion of the one gore forming the openable parachute portion.

3. Canopy according to claim 2, characterized in that the control aperture also comprises two slots (22, 22a; 24, 24a) substantially, perpendicular to said radial slot (20, 20a).

4. Canopy according to any of the claims 1 to 3, characterized in that the inwardly openable parachute portion (30, 30a) at its free edge is connected with the remaining parachute canopy by elastically yielding means such as straps (34).

5. Canopy according to any of the claims 1 to 4, characterized in that several control apertures (20, 20a) are disposed in pairs or uniformly positioned in the one half of the cap (10).

**Patentansprüche**

1. Schirmausbildung eines Fallschirmes (10), welcher wenigstens eine Steuer- oder Treiböffnung (20, 20a) aufweist, deren Öffnungsfläche von einem Fallschirmspringer durch besondere Bedienungsorgane, wie Zugleinen (32, 32a), gezielt veränderlich ist, wobei ein Fallschirmteil (30, 30a) die Steueröffnung an der Innenseite des Schirmes nach innen öffnen kann, so dass er durch den Luftdruck im Fallschirm in eine Lage kommt, in der er die Steueröffnung (20, 20a) überdeckt, wobei der genannte Fallschirmteil (30, 30a) durch die Bedienungsorgane (32, 32a) in eine die Steueröffnung mehr oder weniger öffnende Lage gebracht werden kann und der Luft gestattet, durch die genannte Steueröffnung auszuströmen, dadurch gekennzeichnet, dass die Steueröffnung an der Aussenseite des Fallschirmes wenigstens einen im Grundriss des Fallschirmes radialen Schlitz (20, 20a) aufweist, welcher vollständig durch einen Schirmabschnitt aus einem luftdurchlässigen Material, wie Netz, Gewebe, Bänder o.dgl., abgedeckt ist.

2. Schirmausbildung nach Anspruch 1, dadurch gekennzeichnet, dass die Steueröffnung einen radialen Schlitz (20, 20a) zwischen zwei Fallschirmbahnen aufweist, wobei das Bedienungsorgan (32, 32a) am Mittelteil der einen Fallschirmbahn befestigt ist und den zu öffnenden Fallschirmabschnitt bildet.

3. Schirmausbildung nach Anspruch 2, dadurch gekennzeichnet, dass die Steueröffnung auch zwei Schlitze (22, 22a; 24, 24a) umfasst, die sich hauptsächlich senkrecht zu den Radialschlitzen (20, 20a) erstrecken.

4. Schirmausbildung nach einem der Ansprüche 1—3, dadurch gekennzeichnet, dass der nach innen zu öffnende Fallschirmteil (30, 30a) an seiner freien Kante durch elastische Organe, wie Bänder (34), mit der übrigen Fallschirmkalotte verbunden ist.

5. Fallschirmausbildung nach einem der Ansprüche 1—4, dadurch gekennzeichnet, dass mehrere Steueröffnungen (20, 20a) paarweise und gleichmässig verteilt an der einen Hälfte der Fallschirmkalotte (10) vorgesehen sind.

**Revendications**

1. Voilure de parachute (10) du type comprenant au moins une ouverture de commande ou de conduite (20, 20a) dont la surface est conçue pour pouvoir être commandée par un parachutiste au moyen d'éléments de manoeuvre spéciaux tels que des cordes de traction (32, 32a), une partie du parachute (30, 30a) qui recouvre l'ouverture de commande à l'intérieur de la voilure étant conçue pour pouvoir être ouverte vers l'intérieur de la voilure de parachute de manière que la pression de l'air au sein de cette voilure mette cette partie à la position dans laquelle elle recouvre l'ouverture de commande (20, 20a), cette partie de parachute (30, 30a) étant adaptée pour être mise, par les éléments de manoeuvre (32, 32a), à une position découvrant plus ou moins l'ouverture de commande et permettant l'échappement d'air par cette ouverture de commande, caractérisée en ce que l'ouverture de commande sur le côté extérieur de la voilure comprend au moins une fente (20, 20a), radiale en considérant une vue en plan du parachute, cette fente étant entièrement couverte par une partie de parachute faite d'un matériau perméable à l'air, tel que tissu, tissu fileté, ruban ou analogue.

2. Voilure selon la revendication 1, caractérisée en ce que l'ouverture de commande comprend une fente radiale (20, 20a) entre deux fuseaux du parachute, l'élément de manoeuvre (32, 32a) étant fixé à la portion médiane du fuseau formant la partie de parachute pouvant être ouverte.

3. Voilure selon la revendication 2, caractérisée en ce que l'ouverture de commande comporte aussi deux fentes (22, 22a; 24, 24a) sensiblement perpendiculaires à ladite fente 20, 20a).

4. Voilure selon l'une quelconque des revendications 1 à 3, caractérisée en ce que la partie de parachute (30, 30a) pouvant être ouverte vers l'intérieur est reliée, en son bord libre, au reste de la voilure du parachute par des moyens déformables élastiquement tels que des courroies (34).

5. Voilure selon l'une quelconque des revendications 1 à 4, caractérisée en ce que plusieurs ouvertures de commande (20, 20a) sont disposées par paires ou sont réguliérement réparties dans une moitié de la voilure (10).

FIG.1

FIG.2

# FIG.3

# FIG.5

# FIG.4